# EUROPEAN PATENT SPECIFICATION

(11) **EP 2 782 208 B1**
(45) Date of publication and mention of the grant of the patent: **08.02.2017**
(21) Application number: 14159990.2
(22) Date of filing: 14.03.2014
(51) Int. Cl.: H02J 7/02, H02J 5/00, H02J 7/00, H04B 5/00

(54) **Wireless power transmission system, furniture having wireless charging function used therein, and wireless power transmission apparatus used therein**
Drahtloses Leistungsübertragungssystem, Möbel mit drahtloser Ladefunktion dafür und drahtlose Leistungsübertragungsvorrichtung dafür
Système de transmission de puissance sans fil, meuble présentant une fonction de chargement sans fil utilisé dans celui-ci et appareil de transmission de puissance sans fil utilisé dans celui-ci

(30) Priority: 19.03.2013 KR 20130029346
(43) Date of publication of application: 24.09.2014
(73) Proprietor: Hanrim Postech Co., Ltd, Suwon-si, Gyeonggi-do (KR)
(72) Inventor: Jung, Chun Kil, Seoul (KR)
(74) Representative: Zardi, Marco

(56) References cited:
- WO-A1-2011/151503
- WO-A1-2012/102075
- DE-A1-102006 027 824
- DE-U1-202012 104 775
- US-A1- 2005 068 019
- US-A1- 2009 096 413
- US-A1- 2010 290 215

## Description

### BACKGROUND

### Field

The present invention relates to a furniture having a wireless charging function capable of conveniently charging a portable electronic device such as a smart phone, or the like.

### Description of the Related Art

Generally, a battery pack is to supply an operation power to a portable terminal (cellular phone, personal digital assistants, or the like) in a state in which it is receives a power (electric energy) from an external charger to thereby be charged and is configured to include a battery cell in which the electric energy is charged, a circuit for charging and discharging (supplying the electric energy to the portable terminal) the electric energy in and from the battery cell, and the like.

As a scheme of electrically connecting a charger for charging the electrical energy in the battery pack used in the portable terminal to the battery pack, there is a terminal supplying scheme of receiving a commercial power, converting the commercial power into a voltage and a current corresponding to the battery pack, and supplying the electric energy to the battery pack through terminals of the battery pack.

However, when the power is supplied in the terminal supplying scheme, in the case in which the charger contacts the battery pack or is separated from the battery pack, a terminal of the charger and a terminal of the battery pack have different potential differences to cause an instantaneous discharging phenomenon.

Particularly, when foreign materials are accumulated on these terminals, there is a risk that a fire, or the like, will occur due to the instantaneous discharging phenomenon.

In addition, the electric energy charged in the battery pack is naturally discharged to the outside through the terminal of the battery pack due to moisture, or the like, such that a lifespan of the battery pack may be decreased and performance thereof may be deteriorated.

In order to solve these problems, contactless charging systems and control methods using a wireless power transmission scheme have been recently suggested.

Attempts to apply the contactless charging system particularly to a smart phone, a tablet personal computer (PC), or the like, that needs to be frequently charged have been conducted, since a user does not need to couple a gender for charging. Since a battery should be frequently charged in the smart phone including various applications, users have recently carried a separate charging battery (external battery), which is inconvenient.

Therefore, it has been required to prevent discharging of the smart phone through charging for a while in the case in which the user does not use the smart phone for a while. Further examples of wireless power transmission apparatus and/or systems are disclosed in US 2009/096413 A1, DE 10 2006 027824 A1, US 2005/068019 A1, WO 2012/102075 A1, WO 2011/151503 A1, DE 20 2012 104775 U1 and US 2010/290215 A1.

### SUMMARY

According to an aspect of the present invention, there is provided a furniture having a wireless charging function according to claim 1. Preferred embodiments are addressed in the dependent claims.

The central transmission controlling unit may be configured to select transmission coil units corresponding to a plurality of wireless power reception apparatuses when the plurality of wireless power reception apparatuses are positioned on the plurality of transmission coil units and to transmit the wireless power signals through the selected transmission coil units, respectively.

The central transmission controlling unit may include: an object sensor unit configured to sense a variation in one of a current and a voltage in the plurality of transmission coil units to generate an object sensing signal; a switching controller configured to turn on/off supplying of a power to the transmission coil unit; a driving driver and a resonant converter; and a transmission controller configured to select a transmission coil unit where the wireless power reception apparatus is positioned, based on the object sensing signal from the object sensor unit, to control the switching controller to control a switching unit to transfer a driving signal to the selected transmission coil unit, and to control the driving driver and the resonant converter to transmit an ID request signal to the selected transmission coil unit when it receives the object sensing signal and transmit a wireless power transmission signal when it receives an ID signal from the wireless power reception apparatus according to the ID request signal.

The plurality of transmission coil units may be installed in parallel with each other on the upper surface of the flat plate, and the central transmission controlling unit installed on a lower surface of the center of the flat plate may include: an object sensor unit configured to sense a variation in one of a current and a voltage in the plurality of transmission coil units to generate an object sensing signal; a switching controller configured to turn on/off supplying of a power to the transmission coil unit; and a transmission controller configured to select a transmission coil unit where the wireless power reception apparatus is positioned, based on the object sensing signal from the object sensor unit and to control the switching controller to control a switching unit to transfer a driving signal to the selected transmission coil unit.

The central transmission controlling unit may further include a driving driver and a resonant converter, and control the driving driver and the resonant converter to transmit an ID request signal to the selected transmission coil unit when it receives the object sensing signal from the object sensor unit and transmit a wireless power transmission signal when it receives an ID signal from the wireless power reception apparatus according to the ID request signal.

The plurality of transmission coil units may be disposed so as to be non-overlapped with each other.

The transmission coil unit includes: a transmission coil; and a shielding core part including an accommodating part where the transmission coil is partially accommodated and seated.

The furniture having a wireless charging function further includes a cable connecting the plurality of transmission coil units to the central transmission controlling unit in a wired scheme.

The furniture having a wireless charging function further includes a coating part covering the plurality of transmission coil units.

The coating part further includes a light emitting part emitting a light using the wireless power signal generated from the transmission coil unit.

The coating part further includes: an induction coil configured to receive the wireless power signal and to transfer a power to the light emitting part; a coating controller configured to rectify the power generated from the induction coil and to control an operation of the light emitting part; a light guide plate configured to transfer the light generated from the light emitting part; and may further include a pattern forming plate disposed on the light guide plate and having a pattern formed thereon; and a transparent protective film layer adhered onto the pattern forming plate.

The coating controller may receive a charging state information transmitted from the wireless power reception apparatus through the induction coil and control an operation of the light emitting part based on the charging state information.

### BRIEF DESCRIPTION OF THE DRAWINGS

FIG. 1 is a view for describing an example in which a furniture having a wireless charging function according to an exemplary embodiment of the present invention is used;
FIG. 2 is a view for describing a disposition of transmission coil units in the furniture having a wireless charging function according to an exemplary embodiment of the present invention;
FIG. 3 is a view for describing dispositions of transmission coil units, a central transmission controlling unit, and a coating part in the furniture having a wireless charging function according to an exemplary embodiment of the present invention;
FIG. 4 is a view for describing a configuration of the transmission coil unit in the furniture having a wireless charging function according to an exemplary embodiment of the present invention;
FIG. 5 is a block diagram for describing an electronic configuration of a wireless power transmission system including the furniture having a wireless charging function according to an exemplary embodiment of the present invention; and
FIGS. 6A and 6B are views for describing a coating part used in the furniture having a wireless charging function according to an exemplary embodiment of the present invention.

### DETAILED DESCRIPTION

In the following description, terms "module" and "unit" for components used in the present specification are used only in order to easily make a specification. Therefore, the above-mentioned terms do not have meanings or roles that distinguish from each other in themselves.

Hereinafter, a dining table is shown as a typical example of a furniture having a wireless charging function. It is to be understood that the present invention is not limited thereto, but may be applied to a furniture having a flat plate where a plurality of smart phones are put, such as an office table, a dresser, a desk, a shelf, and the like.

Hereinafter, a furniture having a wireless charging function according to an exemplary embodiment of the present invention will be described with reference to the accompanying drawings.

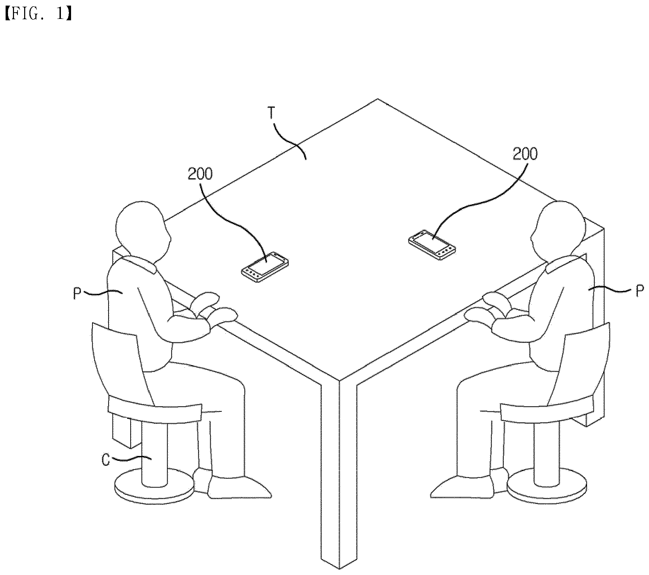

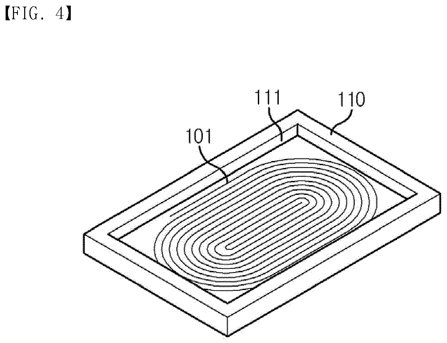

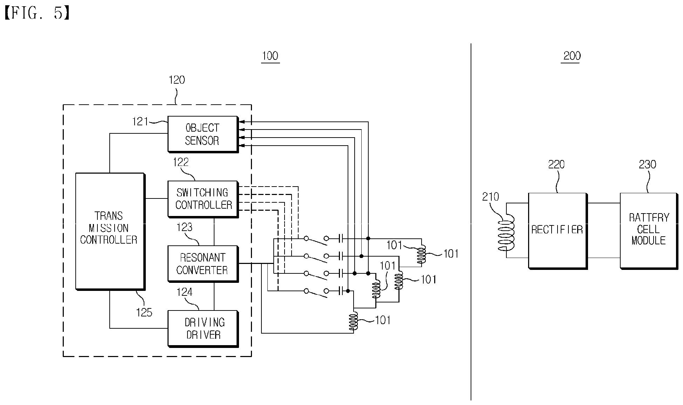

FIG. 1 is a view for describing an example in which a furniture having a wireless charging function according to an exemplary embodiment of the present invention is used. As shown in FIG. 1, when people P have a meal or is in conference, they sit down on chairs C and put smart phones (wireless power reception apparatuses) 200 on a table T. In this case, wireless power signals are transmitted to the smart phones 200 through transmission coils at which the smart phones 200 are positioned among a plurality of transmission coils 101 (See FIGS. 4 and 5) disposed on an upper surface of the table T, such that the smart phones 200 are charged.

According to an exemplary embodiment of the present invention as described above, even in the case in which a user does not specially have an intention to charge the smart phone, the smart phone may be charged, such that discharging of the wireless power reception apparatus such as the smart phone, or the like, may be delayed.

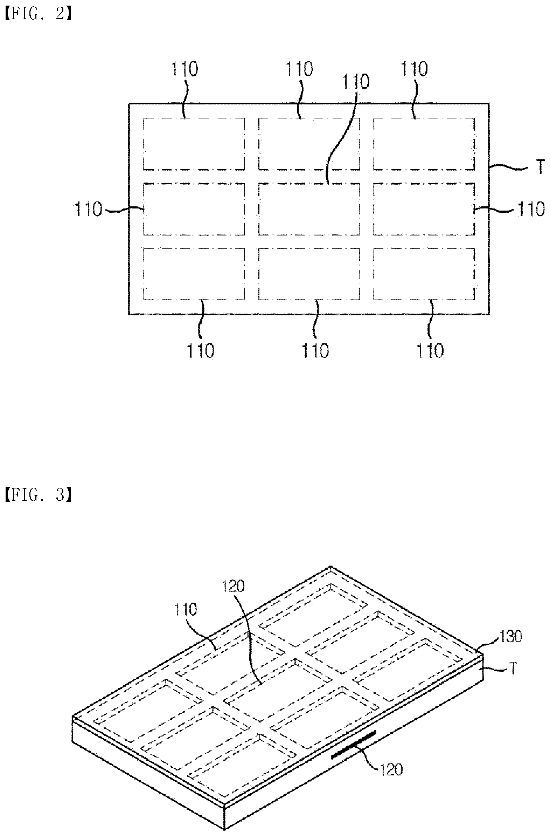

Next, a detailed configuration of the present invention described above will be described in more detail with reference to FIGS. 2 to 5.

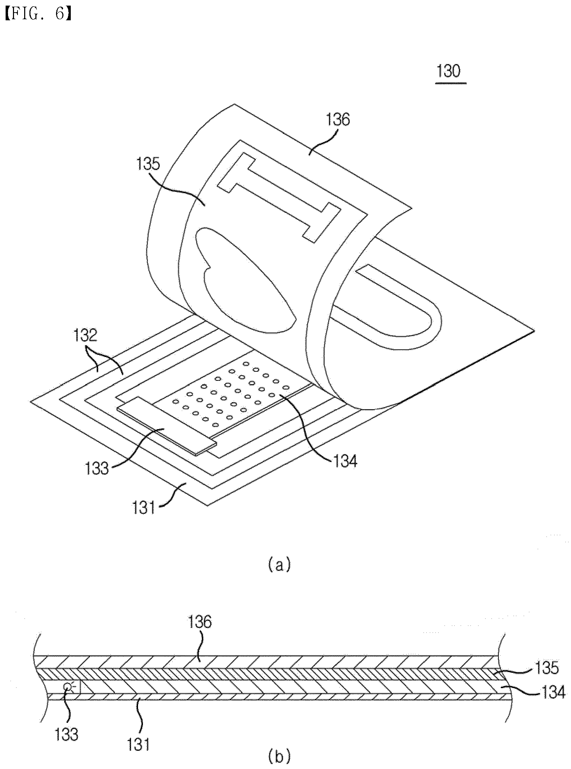

FIG. 2 is a view for describing a disposition of transmission coil units in the furniture having a wireless charging function according to an exemplary embodiment of the present invention. As shown in FIG. 3, only transmission coil units 110 are disposed on an upper surface of the table T so as to be non-overlapped with each other, and a central transmission controlling unit 120 is separately installed so that the transmission coil units 110 transmit wireless power signals. The transmission controlling unit 120 may be detachably installed in a side of the table T. Therefore, in the case in which a defect occurs in the transmission controlling unit 120, the transmission controlling unit 120 may be easily replaced, such that it is convenient to repair and maintain the transmission controlling unit 120. Meanwhile, as shown in FIG. 2, a plurality of transmission coil units 110 are disposed in parallel with each other on the upper surface of the table T. The transmission coil units 110 are arranged in a matrix form as shown. The transmission coil units 110 may be installed on the table T in a form in which they are buried in recess parts formed in a flat plate of the table T or may be disposed on an upper surface of the flat plate of the table T and be then protected by a coating part 130 (See FIGS. 3 and 6) disposed thereon. Meanwhile, a light emitting part is adhered to the coating part, thereby making it possible to provide guidance to the user so as to position the wireless power reception apparatus at an accurate charging position. This will be described in more detail with reference to FIGS. 6A and 6B.

In addition, the transmission coil units 110 are not limited to being disposed in the matrix form, but may be spread without a special rule or be installed at only a circumferential part.

Hereinafter, dispositions of transmission coil units 110 and a central transmission controlling unit 120 will be described in more detail with reference to FIG. 3.

FIG. 3 is a view for describing dispositions of transmission coil units 110, a central transmission controlling unit 120, and a coating part 130 in the furniture having a wireless charging function according to an exemplary embodiment of the present invention. Similar to FIG. 2, the plurality of transmission coil unit 110 may be disposed on the upper surface of the table T, and the central transmission controlling unit 120 may be insertedly installed in the side of the table T. That is, since the central transmission controlling unit 120 installed in the side may be inserted into a slot formed in the side, in the case in which a fault occurs in the transmission controlling unit 120, the transmission controlling unit 120 may be easily repaired. Meanwhile, the central transmission controlling unit 120 and the transmission coil unit 110 are connected to a cable (not shown) in a wired scheme, such that a wireless power signal is transmitted from the transmission coil unit 110 under a control of the central transmission controlling unit 120, and the smart phone, which is the wireless power reception apparatus 200 receives and rectifies the wireless power signal and then charges a battery cell module 230 (See FIG. 5).

Although the form in which the central transmission controlling unit 120 is inserted into the side has been shown in FIG. 3, the central transmission controlling unit 120 is not limited to being inserted into the side, but may be installed at the center of a lower surface of the table T. In this case, since a length of the cable may be minimized, power consumption may be decreased and a manufacturing cost may be decreased.

FIG. 4 is a view for describing a configuration of the transmission coil unit in the furniture having a wireless charging function according to an exemplary embodiment of the present invention. As shown in FIG. 4, the transmission coil unit 110 may be configured to include a transmission coil 101 having an oval shape and a shielding core part 111 including a recess part where the transmission coil is accommodated. The shielding core part 111 is made of a ferrite material to have a function of absorbing or reflecting a magnetic field generated from the transmission coil 101. Therefore, the central transmission controlling unit 120 to be installed on a rear surface of the shielding core part 111 is not affected by the magnetic field of the transmission coil 101. In addition, the magnetic field generated from the transmission coil may be induced to the wireless power reception apparatus to increase transmission efficiency, a size of a groove part formed in the table T is matched to that of the shielding core part 111 in the case in which the transmission coil unit 110 is buried in the table T, thereby making it possible to accurately attach the transmission coil unit 110 to the upper surface of the table T, and it is easy to smoothly process the upper surface of the table T when the coating part 130 is installed on the transmission coil unit 110. In addition, a pattern representing a charging position is formed on the coating part 130, such that the user may put the wireless power reception apparatus 200 at an accurate charging position. Meanwhile, the coating part 130 may be provided with the light emitting part emitting a light using the wireless power signal from the wireless power reception apparatus to provide guidance to the user so as to position the wireless power reception apparatus to an accurate charging position. A structure using the light emitting part will be described in detail with reference to FIGS. 6A and 6B.

Next, an electronic configuration and an operation of the furniture having a wireless charging function according to an exemplary embodiment of the present invention will be described with reference to FIG. 5.

FIG. 5 is a block diagram for describing an electronic configuration of a wireless power transmission system including the furniture having a wireless charging function according to an exemplary embodiment of the present invention. As shown in FIG. 5, the wireless power transmission system includes a wireless power transmission apparatus 100 and a wireless power reception apparatus 200. That is, when the wireless power transmission apparatus 100 transmits the wireless power signal to the wireless power reception apparatus 200 in an electromagnetic induction scheme, the wireless power reception apparatus 200 receiving the wireless power signal charges its battery with a power of the wireless power signal or supplies the power to an electronic device connected thereto. Here, the wireless power transmission apparatus 100 includes a plurality of transmission coils 101 that are configured separately from each other, and at least one transmission coil corresponding to a position at which the wireless power reception apparatus 200 is put among the plurality of transmission coils 101 transmits the wireless power signal. Therefore, the power is supplied to the wireless power reception apparatus 200.

Hereinafter, configurations of the wireless power transmission apparatus 100 and the wireless power reception apparatus 200 will be described, respectively.

The wireless power transmission apparatus 100 according to an exemplary embodiment of the present invention includes the plurality of transmission coils 101 and the central transmission controlling unit 120. Here, the transmission coils (primary coils) 101 are devices for transmitting the power signals to a reception coil 210 of the wireless power reception apparatus 200 in an electromagnetic induction scheme. In the present exemplary embodiment, the number of transmission coils is four, and the plurality of transmission coils 101 are separate components connected to the central transmission controlling unit 120 through the cable, as shown in FIG. 3.

Referring to FIG. 5, the central transmission controlling unit 120 selecting at least one transmission coil corresponding to the position at which wireless power reception apparatus 200 is put when the wireless power reception apparatus 200 is put on the flat plate of the furniture, transmitting the wireless power signal through the selected transmission coil, and installed separately from the plurality of transmission coils 101 may include an object sensor unit 121, a switching controller 122, a resonant converter 123, a driving driver 124, and a transmission controller 125.

The object sensor unit 121 serves to sense a load change of the transmission coil 101, which is the primary coil, judge whether the corresponding load change has been generated by the wireless power reception apparatus 200 (that is, the object sensor unit has a function of an ID confirmer), and filter and process a response signal transmitted from the wireless power reception apparatus 200. That is, the object sensor unit 121 filters and processes an object response signal, which is a response signal to an object sensing signal transmitted through the transmission coil 101, when it receives the object response signal. In addition, the object sensor unit 121 serves to process a charging detection signal (that is, a signal including information on a rectification voltage measured by a rectifier 220) transmitted through the reception coil 210, which is a secondary coil of the wireless power reception apparatus 200. That is, the object sensor unit 121 serves to sense at which of the plurality of transmission coil 101 the wireless power reception apparatus 200 is positioned to generate the object sensing signal and provide the object sensing signal to the transmission controller and serves to receive an ID signal and a charging state signal from the wireless power reception apparatus 200.

The switching controller 122 controls switching operations of switches disposed between the resonant converter 123 and the transmission coils. That is, when the transmission coil corresponding to the wireless power reception apparatus is selected by the object sensor unit 121, the switching controller 122 serves to turn on a switch associated with the coil that is selected and turn off a switch associated with a coil that is not selected, thereby allowing the power signal from the resonant converter 123 to be transferred to only the coil that is selected.

The resonant converter 123 generates a transmission power for generating a power signal that is to be transmitted under a control of the driving driver 124 and supplies the generated transmission power to the transmission coil 101. In other words, when the transmission controller 125 transmits a power control signal for transmitting a power signal having a required power value to the driving driver 124, the driving driver 124 controls an operation of the resonant converter 123 depending on the transmitted power control signal, and the resonant converter 123 applies a transmission power corresponding to the required power value to the transmission coil 101 under the control of the driving driver 124, thereby allowing a wireless power signal having a required strength to be transmitted. That is, in the case in which it is judged that the wireless power reception apparatuses have been put from the plurality of transmission coils, the resonant converter 123 generates separate power signals with respect to the respective transmission coils. Therefore, independent wireless power signals are generated.

In addition, the resonant converter 123 serves to supply powers for generating the object sensing signals through the transmission coils, respectively, under the control of the driving driver 124.

The driving driver 124 controls an operation of the resonant converter 123 under a control of the transmission controller 125.

The transmission controller 125 serve to receive and confirm a judgment result of the object sensor unit 121 to select the transmission coil where the wireless power reception apparatus is positioned among the plurality of transmission coils 101, and control the switching unit to transfer a driving signal to the selected transmission coil. In addition, the transmission controller 125 serves to transmit the power signal for transmitting the wireless power signal through the selected transmission coil 101 to the driving driver 124.

That is, the transmission controller 125 analyzes and processes data signals (the ID signal and the charging state signal) received by the object sensor unit 121 and controls the driving driver 124 depending on the data signal. In addition, the transmission controller 125 serves to generate the object sensing signal and transmit the generated object sensing signal to the wireless power reception apparatus 200 through the transmission coil 101. That is, the transmission controller 125 serves to control the driving driver 124 and the resonant converter 123 to transmit an ID request signal to the selected transmission coil when it receives the object sensing signal from the object sensor unit 121 and transmit the wireless power transmission signal when it receives the ID signal from the wireless power reception apparatus 200 according to the ID request signal.

In addition, the wireless power reception apparatus 200 receiving the power signal to be supplied with the power includes the reception coil 210 generating an induced power by the transmitted power signal, the rectifier 220 rectifying the induced power, and the battery cell module 230 charging a battery cell with the rectified power.

Here, the battery cell module 230 includes a protection circuit such as an overvoltage and overcurrent preventing circuit, a temperature sensing circuit, and the like, and includes a charging managing module collecting and processing information such as a charged state of the battery cell, or the like.

Next, a coating part capable of informing a user whether the wireless power reception apparatus is appropriately put at a charging position in the wireless power transmission system having the above-mentioned configuration will be described with reference to FIG. 6A and 6B.

FIGS. 6A and 6B are views for describing a coating part used in the furniture having a wireless charging function according to an exemplary embodiment of the present invention. FIG. 6A is a partially exploded perspective view for describing an inner portion of the coating part, and FIG. 6B is a cross-sectional view of the coating part. As shown in FIG. 6, the coating part 130 may be configured to include a base part 131, an induction coil 132 installed on the base part 131, receiving the wireless power signal of the wireless power transmission apparatus 100, and generating an alternating current (AC) power, a light emitting part 133 emitting a light by the power generated by the induction coil 132, a light guide plate 134 guiding the light from the light emitting part 133, a pattern forming plate 135 disposed on the light guide plate 134 and having a pattern formed thereon, and a protective film layer 136 disposed on the pattern forming plate 135.

The base part 131, which is adhered to a flat plate portion of the furniture, has an adhesive layer formed therebeneath to allow the coating part 130 to be adhered onto the flat plate of the furniture.

The induction coil 132 generates the AC power by a magnetic field depending on the wireless power signal when the wireless power signal is transmitted from the wireless power transmission system, such that it functions as a light emitting power source of a light emitting part 133 to be described below.

The light guide plate 134 is positioned on the same plane as that of the light emitting part 133 to guide the light emitted from the light emitting part in a transverse direction. Only a portion of the light guided by the light guide plate 134 as described above is irradiated to the outside by the pattern forming plate 135. That is, a light having a specific shape is irradiated depending on a shape of the pattern forming plate 135, and the user may recognize whether the wireless power reception apparatus 200 is currently being put at the charging position through whether or not the light has been irradiated.

The transparent protective film layer 136 for protecting the pattern forming plate 135 may be disposed on the pattern forming plate 135.

Meanwhile, a coating controller (not shown) controlling the light emitting of the light emitting part 133 may receive the charging state information from the wireless power reception apparatus 200 and control an operation of the light emitting part 133 based on the received charging state information. Therefore, the user may confirm a current charging state. For example, the coating controller allows the light emitting part 133 to emit strongly the light when the wireless power reception apparatus 200 becomes close to the charging position based on the charging state information and allows the light emitting part 133 to emit weakly the light when the wireless power reception apparatus 200 becomes distant from the charging position based on the charging state information, thereby making it possible to provide guidance to the user so as to move the wireless power reception apparatus 200 at a more accurate charging position. Further, the coating controller changes a color of the light emitting part 133 when the wireless power reception apparatus 200 is fully charged, thereby making it possible to allow the user to easily recognize that the wireless power reception apparatus 200 has been fully charged.

Meanwhile, a magnetic light emitting layer may be formed instead of the light emitting part emitting the light by the magnetic field depending on the transmission of the wireless power signal. In the magnetic light emitting layer, which is a layer containing a material (luminescent magnetic particles (LuMaPs)) emitting the light using power from the magnetic field, a light emitting degree, a light emitting pattern, a light emitting color, or the like, may be changed depending on a magnitude of the magnetic field generated depending on the transmission of the wireless power signal. It may be visually confirmed by the magnetic light emitting layer whether the wireless power reception apparatus 200 has been positioned at the charging position.

According to an exemplary embodiment of the present invention having the above-mentioned configuration, in the case in which a plurality of wireless power reception apparatuses are put on the table T, appropriate wireless power transmission signals are simultaneously transmitted to the plurality of wireless power reception apparatuses using one central transmission controlling unit and the plurality of transmission coils, thereby making it possible to supply the power to the plurality of wireless power reception apparatuses.

According to an exemplary embodiment of the present invention having the above-mentioned configuration, in the case in which the user has a meal or works on a desk, a smart phone is automatically charged when the user puts the smart phone on the furniture such as the table, such that it may be conveniently charged.

In addition, since the wireless power signals may be individually transmitted by only one central transmission controlling unit and the plurality of transmission coils, the plurality of wireless power reception apparatuses may be charged. Therefore, a manufacturing cost may be decreased to improve an economical efficiency.

In the wireless power transmission system, the furniture having a wireless charging function used therein, and the wireless power transmission apparatus used therein as described above, the configurations and the methods of the above-mentioned exemplary embodiments are not restrictively applied. That is, the scope of the present invention is defined by the appended claims.

## Claims

1. A furniture having a wireless charging function, comprising:
a plurality of transmission coil units (110) disposed on the same plane of a flat plate of the furniture;
a central transmission controlling unit (120) configured to select at least one transmission coil unit (110) among said plurality of transmission coil units (110) corresponding to a position of a wireless power reception apparatus (200) when the wireless power reception apparatus (200) is put on the flat plate and to transmit a wireless power signal through the selected transmission coil unit (110), the central transmission controlling unit (120) being installed in the furniture separately from the plurality of transmission coil units (110), and installed detachably in the furniture; and
a cable connecting the plurality of transmission coil units (110) to the central transmission controlling unit (120) in a wired scheme, and a coating part (130) covering the plurality of transmission coil units (110),
wherein each of the transmission coil units (110) includes: a transmission coil (101); and a shielding core part (111) including an accommodating part where the transmission coil (101) is partially accommodated and seated,
the flat plate of the furniture comprises a plurality of recess parts, and each of the transmission coil units (110) is buried in each of the recess part, and the size of each recess part is matched to the size of the shielding core part (111) of each transmission coil unit,
**characterized in that** the coating part (130) includes a light emitting part (133) configured to emit a light using the wireless power signal generated from the transmission coil unit (110), an induction coil (132) configured to receive the wireless power signal and to transfer a power to the light emitting part (133), a coating controller configured to rectify the power generated from the induction coil (132) and to control an operation of the light emitting part (133), a light guide plate (134) configured to transfer the light generated from the light emitting part (133), and
wherein the coating controller is configured to receive a charging state information transmitted from the wireless power reception apparatus (200) through the induction coil (132) and to control an operation of the light emitting part (133) based on the charging state information for confirmation of a current charging state of a battery cell of the wireless power reception apparatus (200).

2. The furniture having a wireless charging function of claim 1, wherein the plurality of transmission coil units (110) are installed in parallel with each other on the upper surface of the flat plate, and
the central transmission controlling unit (120) includes:
an object sensor unit (121) configured to sense a variation in one of a current and a voltage in the plurality of transmission coil units (110) to generate an object sensing signal;
a switching controller (122) configured to turn on/off supplying of a power to the transmission coil unit (110); and
a transmission controller (125) configured to select a transmission coil unit (110) where the wireless power reception apparatus (200) is positioned, based on the object sensing signal from the object sensor unit (121) and to control the switching controller (122) to control a switching unit to transfer a driving signal to the selected transmission coil unit (110).

3. The furniture having a wireless charging function of claim 2, wherein the central transmission controlling unit (120) further includes a driving driver (124) and a resonant converter (123), and controls the driving driver (124) and the resonant converter (123) to transmit an ID request signal to the selected transmission coil unit (110) when it receives the object sensing signal from the object sensor unit (121) and transmit a wireless power transmission signal when it receives an ID signal from the wireless power reception apparatus (200) according to the ID request signal.

4. The furniture having a wireless charging function of claim 1, wherein the plurality of transmission coil units (110) are disposed so as to be non-overlapped with each other.

5. The furniture having a wireless charging function of claim 1, wherein the coating part further includes:
a pattern forming plate (135) disposed on the light guide plate (134) and having a pattern formed thereon; and
a transparent protective film layer (136) adhered onto the pattern forming plate (135).

## Patentansprüche

1. Möbelstück mit einer drahtlosen Ladefunktion, umfassend:
eine Vielzahl von Übertragungsspuleneinheiten (110), die auf der gleichen Ebene einer flachen Platte des Möbelstücks angeordnet sind;
eine zentrale Übertragungssteuereinheit (120), die dazu ausgelegt ist, wenigstens eine Übertragungsspuleneinheit (110) aus der Vielzahl von Übertragungsspuleneinheiten (110) auszuwählen, die einer Position einer drahtlosen Leistungsempfangsvorrichtung (200) entspricht, wenn die drahtlose Leistungsempfangsvorrichtung (200) auf die flache Platte gelegt wird, und ein drahtloses Leistungssignal durch die ausgewählte Übertragungsspuleneinheit (110) zu übertragen, wobei die zentrale Übertragungssteuereinheit (120) an dem Möbelstück getrennt von der Vielzahl von Übertragungsspuleneinheiten (110) installiert ist und abnehmbar an dem Möbelstück installiert ist; und
ein Kabel, das die Vielzahl von Übertragungsspuleneinheiten (110) mit der zentralen Übertragungssteuereinheit (120) in einem drahtgebundenen Schema verbindet, und einen Beschichtungsteil (130), der die Vielzahl von Übertragungsspuleneinheiten (110) abdeckt,
wobei jede der Übertragungsspuleneinheiten (110) umfasst: eine Übertragungsspule (101); und einen abschirmenden Kernteil (111), der einen Aufnahmeteil umfasst, in dem die Übertragungsspule (101) teilweise aufgenommen ist und sitzt;
wobei die flache Platte des Möbelstücks eine Vielzahl von Aussparungsteilen aufweist, und jede der Übertragungsspuleneinheiten (110) in jedem der Aussparungsteile versenkt ist, und die Größe jedes Aussparungsteils der Größe des abdeckenden Kernteils (111) jeder Übertragungsspuleneinheit entspricht,
**dadurch gekennzeichnet, dass** der Beschichtungsteil (130) einen Licht emittierenden Teil (133), der dazu ausgelegt ist, ein Licht zu emittieren, das das von der Übertragungsspuleneinheit (110) erzeugte drahtlose Leistungssignal verwendet, eine Induktionsspule (132), die dazu ausgelegt ist, das drahtlose Leistungssignal zu empfangen und auf den Licht emittierenden Teil (133) Leistung zu übertragen, eine Beschichtungssteuereinrichtung, die dazu ausgelegt ist, die von der Induktionsspule (132) erzeugte Leistung gleich zu richten und einen Betrieb des Licht emittierenden Teils (133) zu steuern, und eine Lichtführungsplatte (134) umfasst, die dazu ausgelegt ist, das von dem Licht emittierenden Teil (133) erzeugte Licht zu übertragen, und
wobei die Beschichtungssteuereinrichtung dazu ausgelegt ist, eine von der drahtlosen Leistungsempfangsvorrichtung (200) durch die Induktionsspule (132) übertragene Ladestatusinformation zu empfangen und einen Betrieb des Licht emittierenden Teils (133) auf der Basis der Ladestatusinformation zur Bestätigung eines aktuellen Ladestatus einer Batteriezelle der drahtlosen Leistungsempfangsvorrichtung (200) zu steuern.

2. Möbelstück mit einer drahtlosen Ladefunktion nach Anspruch 1, wobei die Vielzahl von Übertragungsspuleneinheiten (110) parallel zueinander auf der oberen Oberfläche der flachen Platte installiert ist, und
die zentrale Übertragungssteuereinheit (120) umfasst:
eine Objektsensoreinheit (121), die dazu ausgelegt ist, eine Schwankung in der Leistung oder in der Spannung in der Vielzahl von Übertragungsspuleneinheiten (110) zu erfassen, um ein Objekterfassungssignal zu erzeugen;
eine Umschaltsteuereinrichtung (122), die dazu ausgelegt ist, die Bereitstellung von Leistung an der Übertragungsspuleneinheit (110) an- und abzuschalten; und
eine Übertragungssteuereinrichtung (125), die dazu ausgelegt ist, eine Übertragungsspuleneinheit (110), bei der die drahtlose Leistungsempfangsvorrichtung (200) positioniert ist, auf der Basis des Objekterfassungssignals von der Objektsensoreinheit (121) auszuwählen und die Umschaltsteuereinrichtung (122) zu steuern, um eine Umschalteinheit so zu steuern, dass ein Antriebssignal auf die ausgewählte Übertragungsspuleneinheit (110) übertragen wird.

3. Möbelstück mit einer drahtlosen Ladefunktion nach Anspruch 2, wobei die zentrale Übertragungssteuereinheit (120) weiterhin einen Antriebstreiber (124) und einen Resonanzwandler (123) aufweist und den Antriebstreiber (124) und den Resonanzwandler (123) steuert, um ein ID-Anfragesignal zu der ausgewählten Übertragungsspuleneinheit (110) zu übertragen, wenn sie das Objekterfasssungssignal von der Objektsensoreinheit (121) empfängt, und ein drahtloses Leistungsübertragungssignal zu übertragen, wenn sie ein ID-Signal von der drahtlosen Leistungsempfangsvorrichtung (200) gemäß dem ID-Anfragesignal empfängt.

4. Möbelstück mit einer drahtlosen Ladefunktion nach Anspruch 1, wobei die Vielzahl von Übertragungsspuleneinheiten (110) so angeordnet ist, dass sie sich nicht gegenseitig überlappen.

5. Möbelstück mit einer drahtlosen Ladefunktion nach Anspruch 1, wobei der Beschichtungsteil weiterhin umfasst:
eine Musterbildungsplatte (135), die auf der Lichtführungsplatte (134) angeordnet ist und auf der ein Muster ausgebildet ist; und
eine transparente Schutzfilmschicht (136), die auf die Musterbildungsplatte (135) geklebt ist.

## Revendications

1. Meuble ayant une fonction de chargement sans fil, comprenant
une pluralité d'unités (110) de bobines de transmission placées sur le même plan d'une plaque plate du meuble,
une unité centrale (120) de contrôle de la transmission configurée pour choisir au moins une unité de bobine de transmission (110) parmi la dite pluralité d'unités de bobines de transmission (110) correspondant à une position d'un appareil de réception (200) de l'alimentation sans fil quand l'appareil de réception de l'alimentation sans fil (200) est placé sur la plaque plate et pour transmettre un signal d'alimentation sans fil à travers l'unité de bobine de transmission choisie (110), l'unité centrale 120) de contrôle de la transmission (étant installée dans le meuble séparément de la pluralité d'unités de bobines de transmission (110), et installée de manière détachable dans le meuble, et
un câble connectant la pluralité d'unités de bobines de transmission (110) à l'unité centrale (120) de contrôle de la transmission selon un schéma câblé et une partie de revêtement (130) couvrant la pluralité d'unités de bobines de transmission (110),
où chacune des unités de bobines de transmission (110) inclut : une bobine de transmission (101) et une partie de protection du noyau (111) incluant une partie de logement où la bobine de transmission (101) est partiellement logée et positionnée,
la plaque plate du meuble comprend une pluralité de parties en creux, et chacune des unités de bobines de transmission (110) est enfouie dans chacune des parties en creux et la taille de chaque partie en creux correspond à la taille de la pièce de protection du noyau (111) de chacune des unités de bobines de transmission,
**caractérisé en ce que** la pièce de revêtement (130) inclut une partie (133) émettant de la lumière configurée pour émettre une lumière utilisant le signal d'alimentation sans fil généré par l'unité de bobine de transmission (110), une bobine d'induction (132) configurée pour recevoir le signal d'alimentation sans fil et pour transférer une alimentation à la partie émettant de la lumière (133), un contrôleur de revêtement configuré pour rectifier l'alimentation générée par la bobine d'induction (132) et pour contrôler le fonctionnement de la partie émettant de la lumière (133), une plaque de guidage de la lumière (134) configurée pour transférer la lumière générée par la partie émettant de la lumière (133), et
où le contrôleur de revêtement est configuré pour recevoir une information sur l'état de charge depuis l'appareil de réception de l'alimentation sans fil (200) à travers la bobine d'induction (132) et pour contrôler le fonctionnement de la partie émettant de la lumière (133) sur la base de l'information sur l'état de charge pour confirmation d'un état de charge en cours d'une cellule de batterie de l'appareil de réception de l'alimentation sans fil (200).

2. Meuble ayant une fonction de chargement sans fil selon la revendication 1, **caractérisé en ce que** la pluralité d'unités de bobines de transmission (110) est installée en parallèle les une avec les autres sur la surface supérieure de la plaque plate, et
l'unité centrale de contrôle de la transmission (120) inclut :
une unité de détection d'objet (121) configurée pour détecter une variation dans le courant ou la tension dans la pluralité d'unités de bobines de transmission (110) afin de générer un signal de détection d'objet,
un contrôleur de commutation (122) configuré pour allumer et éteindre l'alimentation de l'unité de bobine de transmission (110), et
un contrôleur de transmission (125) configuré pour choisir une unité de bobine de transmission (110) où l'appareil de réception de l'alimentation sans fil (200) est placé, sur la base du signal de détection d'un objet provenant de l'unité de détection d'objet (121) et pour contrôler le contrôleur de commutation (122) afin de contrôler un autocommutateur pour transférer un signal d'entraînement à l'unité de bobine de transmission choisie (110).

3. Meuble ayant une fonction de chargement sans fil selon la revendication 2, **caractérisé en ce que** l'unité centrale de contrôle de la transmission (120) inclut en outre un pilote d'entraînement (124) et un convertisseur de résonnance (123) et contrôle le pilote d'entraînement (124) et le convertisseur de résonnance (123) afin de transmettre un signal de demande d'identité à l'unité de bobine de transmission choisie (110) quand il reçoit le signal de détection d'objet de l'unité de détection d'objet (121) et transmet un signal de transmission d'alimentation sans fil quand il reçoit un signal d'identification de l'appareil de réception de l'alimentation sans fil (200) selon le signal de demande d'identification.

4. Meuble ayant une fonction de chargement sans fil selon la revendication 1, **caractérisé en ce que** la pluralité d'unités de bobines de transmission (110) est disposée de manière à ne pas se chevaucher les unes les autres.

5. Meuble ayant une fonction de chargement sans fil selon la revendication 1, **caractérisé en ce que** la partie de revêtement inclut en outre :
une plaque (135) formant un motif placée sur la plaque de guidage de la lumière (134) et ayant un motif formé sur elle, et
une couche de film protecteur transparent (136) collé sur la plaque formant un motif (135).
